# EUROPEAN PATENT APPLICATION

(11) **EP 4 424 878 A2**
(43) Date of publication of application: **04.09.2024**
(21) Application number: 23217254.4
(22) Date of filing: 15.12.2023
(51) Int. Cl.: C25B 9/23, C25B 11/093, C25B 1/04, C25B 15/08, B01D 53/02, B01D 53/22, B01D 53/26

(54) **HYDROGEN GENERATOR FOR GAS CHROMATOGRAPHY APPLICATIONS**

(30) Priority: 18.12.2022 US 202263387953 P
(71) Applicant: Thermo Fisher Scientific (Bremen) GmbH, 28199 Bremen (DE); Thermo Finnigan LLC, San Jose, CA 95134 (US)
(72) Inventor: McCauley, Edward B., Cedar Park (US); Lothar, Rottmann, Bremen (DE); Schlueter, Hans-Juergen, Bremen (DE)
(74) Representative: Robinson, Louise Frances

(57) **Abstract**

The present invention relates to hydrogen generation for use in gas chromatography applications. In particular, the present invention relates to hydrogen generators producing less than 100 standard cubic centimeters per minute of hydrogen and the use of said hydrogen generators in gas chromatography systems and applications.

## Description

### CROSS-REFERENCE TO RELATED APPLICATIONS

This application claims the priority of US Provisional Application S/N 63/387,953, filed on December 18, 2022, the disclosure of which is incorporated herein by reference in its entirety

### FIELD OF THE INVENTION

The present invention relates to hydrogen generation for use in gas chromatography applications. In particular, the present invention relates to hydrogen generators producing less than 100 standard cubic centimeters per minute of hydrogen and the use of said hydrogen generators in gas chromatography systems and applications.

### BACKGROUND OF THE INVENTION

Gas chromatographs are well known devices used to separate chemical mixtures. Within a gas chromatograph is an analytical column which generally comprises an elongate fused silica capillary tube coated internally with a cross bonded stationary phase. The column may be from a few tens to a few hundreds of micrometres in diameter and vary in length from a few meters to as many as a hundred meters or so. It is known to use a carrier gas in these columns such as helium, nitrogen, argon, or hydrogen in order to allow transport of the separated analytes through the column and to a suitable detection system. The various gasses used as the carrier gas have differing viscosities, heat conductivities, diffusion rates and chemical activities amongst other properties.

Hydrogen is often used as a carrier gas for GC (gas chromatography) despite the flammable nature of hydrogen over a wide concentration range. Hydrogen can be delivered from a high pressure gas cylinder, or by using a hydrogen generator having an electrolysis cell such as a solid phase electrolyte PEM cell (Polymer Electrolyte Membrane) or from a liquid phase electrolysis cell utilizing an acidic or basic electrolyte solution.

However, while using hydrogen from a hydrogen generator is safer than using compressed cylinders due to the limited volume of hydrogen contained within the generator, the instantaneous volume of hydrogen is only one figure of merit regarding hydrogen safety. Another figure of merit concerning safety is the production rate capability of the device. For example, if there is a column break near the injection port of a gas chromatograph utilizing fore-pressure regulation, the flow of hydrogen into the oven can reach several hundred milliliters per minute. This presents a significant safety hazard unless the oven is equipped with a fast-acting hydrogen sensor which can both disable power to the heating element of the oven as well as shut down delivery of hydrogen from the gas generator. One example of this type of hydrogen sensor is the Series 9000 hydrogen sensor from Brechbuhler AG Switzerland. While capable of mitigating hydrogen risk, this type of sensor adds cost, size, complexity, and power consumption to the overall system.

US9632064 describes an injection port for a gas chromatograph whereby hydrogen carrier gas is used for the separation process, while a non-hydrogen auxiliary pressurization gas is used to pressurize the inlet as well as act to provide septum purge and split flow gas. Such an implementation will be referred to herein as a carrier gas-decoupled injection port. Such injection ports allow safer operation with hydrogen, since the flow of hydrogen delivered to the injection port can be limited to a value in which the lower explosive limit (LEL) of hydrogen can never be achieved in the oven even in the event of a column break.

GC ovens are not hermetically sealed devices, and as such, low flows of hydrogen such as 10 standard cubic centimeters per minute (sccm) into the oven will diffuse out of the oven before LEL can be achieved. Additionally, the embodiments described in US9632064 will predominantly deliver inert pressurization gas in the event of a column break near the injection port. The inert pressurization gas will act to dilute the introduced hydrogen as well as act as a positive purge mechanism to displace hydrogen from the oven.

Conventional hydrogen generators for gas chromatography are designed to deliver upwards of one hundred milliliters per minute of hydrogen, with mid-sized units being capable of delivering 500 sccm. These higher flow rates are needed in order to support high split flows which are conventionally employed on GC systems having split-splitless injection ports (SSL), programmable temperature vaporization injection ports (PTV) or other types of inlets used for gas chromatography wherein a majority of carrier gas is split to atmosphere. As an example, a chromatograph method may operate in split injection mode whereby a column flow of 1 sccm is used in conjunction with a split flow of 300 sccm. This results in a split ratio of 300 to 1. Split mode injection is often used when sample concentration is high such as direct injection of a petroleum fraction. The terms "inlet" and "injection port" are used interchangeably herein.

While the practice of US9632064 can prevent the buildup of an unsafe level of hydrogen within the confines of a chromatograph oven, external leaks in the plumbing of a conventional generator can still present a flammability risk due to the high flow rate potential. In addition, the high flow capacity of these units often precludes the use of palladium membrane purification techniques due to the high cost of palladium. Conventional units are also heavy, occupy valuable bench space, are noisy due to needing large cooling fans for the power supplies and use large amounts of power.

Accordingly, there is the need in the art for hydrogen generators for gas chromatography applications that address at least some of the abovementioned issues. Especially those used with a carrier gas-decoupled injection port.

### SUMMARY

The present inventors have surprisingly and unexpectedly found that an effective and safe hydrogen gas generator system for use in gas chromatography, can be provided by the provision of a hydrogen gas generator system, wherein the hydrogen generator system comprises an electrolysis cell and a palladium alloy purifier membrane having a surface area of not more than 10 square centimeters.

This may hereinafter be referred to as the system of the invention.

This is unexpected because the use of such parameters results in significantly lower hydrogen production rates than conventionally used for gas chromatography.

Thus, in a first aspect, the present invention provides a hydrogen gas generator system for a gas chromatograph having a carrier gas-decoupled injection port, wherein the hydrogen generator system comprises an electrolysis cell and a palladium alloy purifier membrane having a surface area of not more than 10 square centimeters.

As used herein, the term "gas-decoupled injection port" means an injection port as defined in US9632064. This is an injection port which is configured to provide two key features differentiating itself from conventional injection ports. The first key feature is that the injection port allows for two different gas types to enter the injection port at the same time during analysis. One gas type is used to provide gas flow to the analytical column (carrier gas) while the second gas type is used to pressurize the injection port and provide the requirements of split flow and septum purge flow (auxiliary gas). The second key feature is the provision of a back diffusion barrier which serves to decouple the two gas types. The back diffusion barrier allows for the auxiliary gas to pressurize the inlet and control the flow of carrier gas through the column without intermixing with the carrier gas entering the column during analysis. Since the column flow is typically much lower than the flows used to support the split flow and septum purge flow, gas-decoupled injection ports can be used in at least two significant ways. One way is to conserve carrier gas when an expensive or difficult to procure carrier gas is employed such as helium, and another way is to increase the margin of safety when a flammable carrier gas is used such as hydrogen. These key features are also described in US8371152 and US9632064 respectively.

An electrolysis cell uses electrical energy to split water into its basic elements hydrogen and oxygen. Hydrogen gas is formed on an active hydrogen surface (cathode) within the electrolysis cell. Any electrolysis cell may be used in the system defined herein. However, it may be preferred that the electrolysis cell is a polymer electrolyte membrane (PEM). The core of the PEM electrolyzer technology is the proton conducting polymer membrane from which the name is derived. This membrane separates the reaction compartments for hydrogen and oxygen, and also provides the ionic contact between the electrodes, which is essential for the electrochemical process. Production of the hydrogen gas itself takes place on the surface of the respective precious metal electrode.

Where the system comprises a PEM, the PEM may comprise a sulfonated fluoropolymer (such as a sulfonated tetrafluoroethylene based fluoropolymer-copolymer, i.e. Nafion).

The sulfonated fluoropolymer may be coated with a catalyst in order for provide anode and cathode surfaces. For example, the sulfonated fluoropolymer may be coated with iridium ruthenium oxide on the anode side and platinum black on the cathode side. The skilled person will appreciate that other coatings may be used to provide the desired effect.

The active hydrogen surface of the electrolysis cell (such as the PEM) may be not more than 10 square centimeters, such as not more than 5 square centimeters, or not more than 3 square centimeters. For example, the active hydrogen surface may be from about 1 square centimeter to about 5 square centimeters.

The hydrogen generation current applied to the electrolysis cell (such as the PEM) may be not more than 14 amperes, such as not more than 7 amperes.

For example, the hydrogen generation current may be from about 1 ampere to about 14 amperes, such as about 7 amperes.

The limitation of the active hydrogen production surface and/or the hydrogen generation current results in a decrease in the production rate of hydrogen gas.

Typically, the hydrogen production rate of the electrolysis cell (such as the PEM) is limited by both physical and electrical means. That is the electrolysis cell may have an active hydrogen production surface area of the cell membrane of 5 square centimeters or less (for example, from about 1 square centimeter to about 5 square centimeters, or from about 2 square centimeters to about 3 square centimeters) and a hydrogen generation current of 14 amperes or less, such as from about 1 amperes to about 14 amperes, such as about 7 amperes applied to a single cell.

As noted previously, the system of the invention may provide hydrogen gas production rates of not more than 100 standard cubic centimeters per minute (sccm), such as production rates of not more than 25 sccm.

For example, the hydrogen gas production rates may be from about 1 sccm to about 100 sccm, or from about 5 sccm to about 50 sccm or from about 10 sccm to about 25 sccm.

In the system of the invention, the palladium alloy purifier membrane may be a single linear tube of palladium alloy.

For example, the palladium alloy may be palladium silver alloy. The palladium silver alloy may comprise palladium:silver in a ratio of from about 1:99 to about 99:1, such as from about 10:90 to about 90:10 or from about 30:70 to about 70:30. In a preferred aspect, the palladium:silver ratio may be from about 85:15 to about 70:30, such as 77:23, i.e. 77% palladium and 23% silver.

The palladium purifier membrane may be separate from the electrolysis cell or may be integrated within the electrolysis cell.

That is the palladium purifier membrane may act as the cathode in the electrolysis cell.

Typically, in the system of the invention, the palladium purifier membrane has a surface area no greater than 10 square centimeters, such as no greater than 5 square centimeters.

For example, the palladium purifier membrane may be from about 1 square centimeter to about 10 square centimeters, such as from about 2 square centimeters to about 8 square centimeters or about 5 square centimeters.

The electrolysis cell in the system of the invention may comprise a piezoelectric pump. The piezoelectric pump may have a volumetric flow capacity of no more than 20 milliliters per minute, such as from about 1 milliliter per minute to about 20 milliliters per minute, or from about 5 milliliter per minute to about 15 milliliter per minute.

The system of the invention may comprise a backpressure regulator. Typically, the backpressure regulator may be combined with a capillary restrictor, sintered frit or orifice.

The backpressure regulator is set to provide a limitation to the pressure of the hydrogen flow. For example, providing a pressure of from about 60 psig to about 150 psig, such as about 80 gauge pounds per square inch (psig).

The system of the invention may comprise a polymer ionomer for removing water vapor from the hydrogen gas.

Typically, the polymer ionomer may be a sulfonated fluoropolymer, such as a sulfonated tetrafluoroethylene based fluoropolymer-copolymer, also known as a Nafion^{™}, although other polymers may be used.

In an aspect of the invention, the system of the invention may comprise a polymer electrolyte membrane and a palladium silver purifier membrane having a surface area of not more than 10 square centimeters.

In an alternative aspect, the system of the invention may comprise an electrolysis cell comprising a palladium alloy purifier membrane having a surface area of not more than 10 square centimeters.

In a further aspect, the present invention also provides a gas chromatography system comprising a hydrogen generator system, wherein the hydrogen generator system comprises an electrolysis cell and a palladium alloy purifier membrane having a surface area of not more than 10 square centimeters.

### BRIEF DESCRIPTION OF THE DRAWINGS

The above noted and various other aspects of the present invention will become apparent from the following description which is given by way of example only and with reference to the accompanying drawings, not necessarily drawn to scale, in which:
**Fig. 1** - A block diagram of a gas generation system in accordance with the present invention.
**Fig. 2** - A block diagram of a palladium purifier that may be used in the gas generation system of the invention.
**Fig. 3** - A graph detailing the palladium purifier flow versus pressure.
**Fig. 4** - A block diagram of an alternative embodiment of a gas generator system of the invention.
**Fig. 5** - A block diagram illustrating a carrier gas-decoupled injection port that may be used in the gas chromatograph.

### DETAILED DESCRIPTION

The systems of the present invention provide safer and more efficient hydrogen generation in gas chromatography.

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the invention as defined by the appended claims.

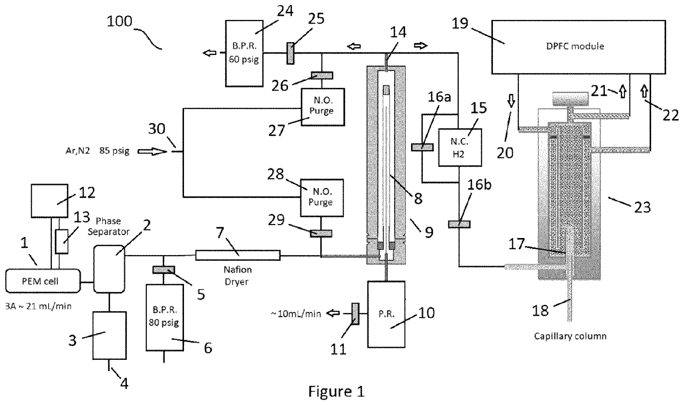

Figure 1 illustrates a hydrogen generator system **100** in accordance with the present teachings comprising a polymer electrolyte membrane (PEM) cell which may have an active hydrogen production surface area of the cell membrane of 5 square centimeters or less. For example, from about 1 square centimeter to about 5 square centimeters, or from about 2 square centimeters to about 3 square centimeters. The membrane of PEM cell **1** comprises a sulfonated fluoropolymer such as Nafion 115. The membrane is in the form of a catalyst coated membrane (CCM) which may have a coating of iridium ruthenium oxide applied to an anode side of the membrane while platinum black may be applied to a cathode side of the membrane. The membrane of PEM cell **1** should not be confused with the tubular Nafion membrane of Nafion drier **7** or the palladium-silver membrane of palladium purifier **9** described later.

Additionally, a secondary limitation may be applied to PEM cell **1** by limiting the hydrogen generation current to 14 amperes or less, such as from about 3 amperes to about 14 amperes, or from about 5 amperes to about 10 amperes applied to a single cell.

These imposed limitations increase the margin of safety of hydrogen system **100** over conventional systems which are designed with higher flow capacity, and which also may incorporate multiple PEM cells in a so-called PEM "stack" arrangement. These limitations also allow the hydrogen generator to have a smaller size and reduced power consumption.

Of particular note, conventional hydrogen generators rely on a demand-based, fore-pressure regulated scheme of operation. Embodiments described herein including hydrogen system **100,** utilize a non-demand-based backpressure regulated scheme of operation. Briefly, fore-pressure regulated systems measure a pressure decrease in a system and open a valve upstream of the system in order to restore the target pressure. An example of this is a common pressure regulator used on a high pressure gas cylinder. On the other hand, a backpressure regulated system typically has a constant rate of gas introduction and responds to a pressure increase in the system by opening a pressure relief valve downstream of the system in order to restore the target pressure. The advantages of backpressure regulation when using hydrogen are explained as follows. Demand-based hydrogen generators deliver a variable amount of hydrogen based on demand. If demand increases, the current density of the hydrogen PEM cell or electrolyzer automatically increases to offset the increase in demand. Unfortunately, there is no way for the generator to determine if the increase in demand is related to an operational state of the chromatograph (such as the opening of a split valve) or if the demand increase is related to a leak in the system. This characteristic of demand regulation results in the generator blindly increasing hydrogen production and can translate into sizable leaks going un-noticed and un-checked for long periods of time increasing risk. In a low-flow backpressure regulated system, any leaks in the system do not change flow rate are more likely to be detected due to inadequate instrument performance. Low flow backpressure regulation also allows for steady-state operation of the hydrogen production and purification processes which may translate into lower component stress and prolonged lifetime.

A constant current power supply (not shown) delivers approximately 1 ampere of current for each 7 sccm of desired flow for a single cell PEM arrangement.

Following generation in the PEM cell, the hydrogen gas travels to a phase separator **2.** The phase separator **2** may be of conventional design and may comprise a pressure vessel, a float and magnetic or optical switch.

When water enters phase separator **2,** the float may perturb or break a light beam between a light emitting diode and phototransistor. This information can trigger a current pulse to a solenoid valve in order to discharge the water while retaining the gas phase hydrogen at a pressure above atmospheric pressure.

The phase separator **2** may alternatively comprise a Hall effect sensor, a magnetic reed switch, a mechanically operated float switch or other means known in the art. The float incorporated into phase separator **2** may comprise a low-density water-resistant solid polymer such as polymethylpentene otherwise known as TPX. Float switches for liquid level sensing utilizing TPX are described for example in US6557412 using a Hall Effect sensor for liquid level sensing, or as in Japanese patent JP7117411 using and infrared light beam interrupter.

The phase separator **2** separates gaseous hydrogen from liquid water and can be configured to discharge water through a solenoid valve **3** and discharge port **4.** The discharged water may return to a water reservoir **12** serving to feed the PEM cell after first passing through a mixed bed ion exchange resin cartridge (not shown) in a closed-loop arrangement as is conventionally employed in order to remove positively charged trace metallic ions formed from corrosion of metallic components as well as nonmetallic anions formed due to ingress of atmospheric carbon dioxide.

Due to the small production capacity of PEM cell **1,** a non-conventionally employed water pump such as a piezoelectric micropump **13** may be used. These types of pumps have very limited flow capacity but have higher reliability than brushless water pumps and lower cost than micro gear pumps. They also can be made much smaller. An example of this type of pump is model SDMP320 from Takasago Electric Inc. Japan. This pump has a volumetric flow capacity of 20 milliliters per minute and incorporates a single active moving part. The active component comprises a piezoelectric bimorph which acts under the influence of a high voltage low current alternating power supply. The size of this pump is a mere 5.5mm in thickness with a length and width of 33mm. Another example of such a pump is the Bimor Series BPS-215i from Nitto Kohki Ltd. Japan. This pump has a volumetric flow of 30 milliliters per minute and is capable of operating directly on mains power yet demands less than 3 milliamps of current to operate. Piezoelectric pumps are not only reliable, cost effective, small, and self-priming, they also draw less power than pumps used in conventional hydrogen generators. The low flow features of piezoelectric micropumps as described are impractical for use on conventional hydrogen generators since they do not have adequate flow rates to clear stagnant oxygen from the PEM cell anode. Stagnant oxygen pockets can result in diminished PEM cell capacity as well as shortened PEM cell lifetime.

The piezoelectric micropump **13** may have a flowrate of 30 milliliters per minute or less.

A back pressure regulator **6** in conjunction with a flow limiting element **5** such as a capillary restrictor, sintered frit or orifice can be set to deliver a target pressure upstream of flow limiting element **5** of from about 60 psig to about 150 psig, such as about 80 gauge pounds per square inch (psig).

The target pressure is selected to be lower than the maximum continuous operational pressure of the PEM cell **1** as defined by the manufacturer, but a preferable pressure may be from about 60psig to about 150psig. Back pressure regulator **6** may be a fixed (non-adjustable) mechanically operated pressure relief valve, an adjustable mechanical back pressure regulator or a regulator comprising an electrically driven proportional valve in combination with a pressure transducer, microcontroller, and control firmware.

Hydrogen exiting the phase separator **2** though void of liquid water is nonetheless saturated with water vapor. In order to reduce the risk of downstream water condensation, a moisture removal device such as a sulfonated tetrafluoroethylene based fluoropolymer-copolymer, also known as a Nafion^{™} drier **7** can be in the hydrogen flow path upstream of a gas purifier **9.**

Although driers such as Nafion^{™} may be preferred, other moisture removal devices may be used. These include silica gel driers, molecular sieve driers and the like. An advantage in using Nafion^{™} is that it does not require periodic regeneration or replacement. Although Nafion^{™} is expensive, the low flow employed in PEM cell **1** allows for using a drier length of less than 15 centimeters in length. A small fan may also act to blow ambient air across the drier surface to improve efficiency. In order to reduce the level of hydrogen humidity even further, an externally applied dry purge gas such as zero air, nitrogen or argon may be applied along the length of a coaxial tube surrounding drier **7** (not shown). Alternatively, a vacuum source such as the roughing pump of a gas chromatograph mass spectrometer (GCMS) may be applied externally to drier **7.** This has the advantage of very high water removal efficiency as well as not consuming inert purge gas. It may be necessary however to open the roughing pump gas ballast valve in order to periodically remove condensed water vapor.

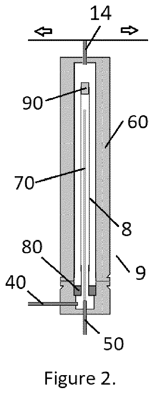

Reference is now given to Figure 2 which provides a more detailed description of a gas purifier, in the form of a palladium purifier **9** that may be utilized in a system as described in Figure 1. For simplicity, the remaining description may exemplify the purifier as the palladium purifier **9.** However, as will be understood by the skilled person other purifiers may be used. The purifier **9** preferably comprises a single linear tube of palladium-silver alloy. Prior art palladium purification devices employ a multiplicity of palladium alloy tubes, or a single long tube formed in a coiled configuration. Coiled tubes are compact but have the disadvantage of pressure induced deformation. Multiple linear tubes have the disadvantage of increased complexity as well as an increased chance of flammable hydrogen leakage due to the leak probability of any given tube being multiplied by the number of tubes. Both of these prior art implementations also suffer from high palladium cost, so modern hydrogen generators typically use purification techniques involving pressure swing adsorption, temperature swing adsorption or silica gel drying despite the lower level of hydrogen purity that is produced. Embodiments of the present invention can utilize amounts of palladium unsuitable for prior art hydrogen generators. Typically using palladium in amounts much less than in prior art hydrogen generators.

Impure hydrogen enters conduit **40** and is confined to entering the interior of palladium purifier **9.** Palladium purifier **9** may house a palladium alloy membrane **8** comprising an alloy of palladium and silver such as 77% Pd and 23% Ag. This ratio of palladium-to-silver content is preferred and is known to minimize the internal membrane stress when the membrane is exposed to hydrogen when less than about 310 degrees Celsius. Other alloy compositions known in the art may be utilized. As a non-limiting example, the palladium alloy membrane **8** may comprise a 2-millimeter outer diameter tube having a wall thickness of 0.06 mm and a length of 60 millimeters. The preferred length of membrane **8** is from about 20mm to about 100mm. The preferred diameter of membrane **8** is from about 1mm to about 3mm and the preferred wall thickness of membrane **8** is from about 0.03mm to about 0.1mm. The composition of the alloy may be 75% palladium and 25% silver. Preferred ranges of the palladium-silver membrane are from about 15% to about 30% silver.

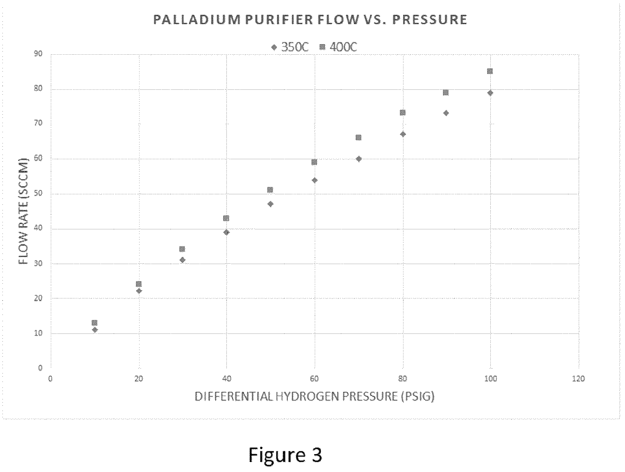

A tube as described above (2mm outer diameter x 60mm length x 0.06mm wall thickness and composition of 75% Pd and 25% Ag) when heated to 350 degrees Celsius with a pressure drop of 15 psig of pure hydrogen will permeate hydrogen in excess of 10 sccm. The pressure-flow characteristics of such a tube is illustrated in Figure 3. Lower amounts of palladium may be utilized than described above but will require higher PEM cell pressure, reduced membrane wall thickness or increased temperature. Operation at lower temperature and pressure facilitates safety, helps to eliminate potential PEM cell water or gas leakage, and results in less component stress which translates into higher reliability. In all cases, the amount of palladium used is a lower amount than conventionally used in hydrogen generators with palladium purifiers because of the low flow demand of back diffusion barrier **17** which requires less than about 10sccm of hydrogen flow.

The palladium purifier **9** may be heated during operation to a temperature above about 310 degrees Celsius such as 350 degrees Celsius. The preferred range from about 325 degrees Celsius to about 400 degrees Celsius. It is preferable to keep hydrogen from contacting the palladium alloy membrane **8** when the temperature of palladium purifier **9** is below about 310 degrees Celsius. This prevents undue stress fatigue of the membrane **8** which can occur due to temperature induced phase transitions within the alloy structure. Membrane terminal end structures **80** and **90** can comprise maraging steel, an alloy of steel or a stainless steel. Membrane terminal end structures **80** and **90** are further silver soldered, vacuum oven brazed, laser welded or otherwise secured in order to confine the impure hydrogen to one side of palladium alloy membrane **8.** Only ultra-high purity hydrogen and hydrogen isotopes can pass through palladium alloy membrane **8** and exit the assembly through conduit **14.** Impurities including water vapor, oxygen and organic compounds are forced to exit from the interior of palladium alloy membrane **8** through a conduit **70** using an excess of hydrogen gas. The conduit **70** may comprise a short segment of hypodermic needle stock. The conduit **70** may be silver soldered, laser welded, vacuum oven brazed or otherwise secured to a larger diameter exit conduit **50.** The uppermost end of conduit **70** in the illustration is open ended.

Referring again to Figure 1, an excess of hydrogen gas produced by PEM cell **1** will enter the palladium purifier **9.** This excess hydrogen will clear accumulated contamination from palladium alloy membrane **8** by forcing it through pressure regulator **10** which is in series combination with flow restrictor **11.** The setpoint pressure of the pressure regulator **10** as well as the degree of restriction of restrictor **11** are chosen such that a relatively constant flow is established through the regulator **10** irrespective of the input pressure. As a non-limiting example, the flow through regulator **10** may be less than about 10 sccm, such as 5 sccm. In order to increase the purge efficiency of impurities, the pressure regulator **10** may be adjusted such that the back pressure regulator **6** just begins to open. This will allow the excess hydrogen generated by PEM cell **1** to be used for purging impurities rather than being wasted out of back pressure regulator **6** to atmosphere. Ultra-high purity hydrogen gas exiting conduit **14** establishes a maximum pressure based on back pressure regulator **24.** In a preferred example, the hydrogen pressure upstream of regulator **24** is from about 50 psig to about 70 psig. This will allow sufficient flow of hydrogen to back diffusion barrier **17** when flow restrictor **16b** is sized to allow a flow of from about 4sccm to about 10sccm of hydrogen. A series flow restrictor **25** may be used to stabilize oscillations in back pressure regulator **24** as well as limit volumetric flow rate. The setpoints of back pressure regulators **6** and **24** largely determine the pressure differential across palladium alloy membrane **8.** Back pressure regulator **24** is preferably set such that it delivers a small non-zero flow of exit gas such as 0.5 sccm when the GC is in a non-injection state of operation. The nonzero flow allows three advantages. First, the non-zero flow allows for outgassed surface impurities of back pressure regulator **24** as well as restrictors **25** and **26** from diffusing into the gas stream feeding normally closed (N.C.) valve **15.** (Normally closed and normally open (N.O.) are terms describing the un-powered state of the valve in question rather than the operational state of the valve.) Second, the low non-zero flow of back pressure regulator **24** ensures that high purity hydrogen gas is not wasted to the atmosphere. Third, the low non-zero flow of back pressure regulator **24** ensures that when valve **15** is closed, the subsequent pressure rise will result in an immediate flow response in back pressure regulator **24** thereby minimizing the change in differential pressure across palladium alloy membrane **8,** since the output pressure will remain relatively unchanged. Although high purity hydrogen is wasted out of the exit of back pressure regulator **24** during injection, the injection interval is typically less than one minute in duration and the wasted flow is less than 10 sccm. Back diffusion barrier **17** of a carrier gas-decoupled injection port **23** receives hydrogen gas from valve **15** as well as a non-hydrogen pressurization gas **20** from a digital pressure and flow controller (DPFC) module **19** sometimes referred to as electronic pressure control (EPC). The DPFC module **19** utilizes conventional DPFC hardware but differs operationally in two respects. First, the hardware receives a gas type differing from hydrogen to be used for septum purge flow **21** and split vent flow **22.** Secondly, the algorithm used to control the column head pressure is based on the viscosity of hydrogen, while the algorithm used to control split and purge flows are based on the viscosity of the pressurization gas.

Valve **15** of gas-decoupled injection port **23** has two states of operation. In the energized state, the valve is open and delivers a low flow of hydrogen determined by restrictor **16b** to back diffusion barrier **17** such as a flow of from about 4 to about 10 sccm. The flow of hydrogen in the back diffusion barrier **17** occludes the non-hydrogen pressurization gas **20** from entering the GC column **18.** In a second state, the valve **15** is de-energized and closed. In the closed state, a small residual hydrogen purge of a few tenths sccm passes through parallel restrictor **16a** in order to eliminate solvent back diffusion during injection. The pressurization gas preferably comprises argon or nitrogen. These gasses are inert, low cost, abundant and are often already equipped on GCMS triple quadrupole mass spectrometers which require nitrogen or argon collision cell gas. The small residual purge of hydrogen in the closed state of valve **15** is insufficient to prevent pressurization gas from entering the GC column **18.** The pressurization gas entering the GC column acts to transfer sample analytes during an injection phase of the chromatograph. It should also be understood that although preferred, valve 15 and restrictors 16a and 16b are not strictly necessary for a gas-decoupled injection port to operate. Rather than using a valve to stop or otherwise reduce the flow of hydrogen into back diffusion barrier 17, the DPFC module 19 can instead apply a pressure surge during the injection phase in order to transfer analytes to the column 18. This mode of sample transfer is described in US11255828. The ideal case is to deliver an amount of carrier gas to the back diffusion barrier 17 which is just above that which is necessary to prevent the auxiliary gas from entering the column 18 during analysis. This allows using a minimum of pressure surge to transfer analytes. However, since there is variability in the tolerances of column 18 on a column to column basis, it can be a time consuming endeavor to optimize. Thus, it is preferred to use valve 15 and restrictors 16a and 16b and use an amount of hydrogen gas delivered to back diffusion barrier 17 which is large enough to offset this variability. This results in better ease-of-use.

As noted earlier, the palladium alloy membrane **8** should not be exposed to hydrogen when less than about 310 degrees Celsius. A pair of electrically actuated solenoid valves **27** and **28** can receive a non-hydrogen inert purge gas such as argon or nitrogen from a gas entry point **30.** The pressure of the non-hydrogen purge gas may be higher or lower than the setpoint pressure of back pressure regulators **6** and **24.** Setting the pressure higher than the setpoints of back pressure regulators **6** and **24** will allow faster purging of hydrogen when the system is placed in a standby (non-hydrogen producing) condition, or during a power failure such that hydrogen can be rapidly vented through the normally open valves **27** and **28.** The flow rate of purge gas entering entry point **30** can be governed by flow restrictors **26** and **29.** Restrictor **29** may be chosen to offer more restriction than restrictor **26** such that the pressure on the input side of palladium alloy membrane **8** will remain higher than the pressure on the output side. In addition, a pneumatic check valve (not illustrated) can be placed across the input and output of palladium alloy membrane **8** in order to ensure the output pressure will remain in safe limits. Tubular metallic alloy membranes with thin wall structures are able to handle higher internal pressures than external pressures due to the tensile strength of the metallic alloy. Normally open valves **27** and **28** can remain open during a heat up phase of palladium purifier **9,** and close when the purifier rises above a target temperature such as above 340 degrees Celsius. The closing of valves **27** and **28** can occur in concert with the delivery of power to the PEM cell **1.** The opening of valves **27** and **28** can occur during a shutdown sequence of the hydrogen generator, during a low power standby condition or during a power failure. The opening and closing of valves **27** and **28** may be governed by a timer or in response to an instruction executed by a microprocessor monitoring pressure and/or temperature conditions of PEM cell **1.** PEM cell **1** may be configured to produce more hydrogen that what is required for operation of the carrier gas decoupled inlet **23.** This excess gas may branch off at a point following Nafion drier **7.** Alternatively, the branched hydrogen may branch upstream of drier **7** and utilize a separate water removal device. The branched hydrogen may serve the needs of a flame ionization detector (FID) for the chromatograph which requires a lower level of hydrogen purity from the perspective of residual water vapor and oxygen as does the carrier gas supply.

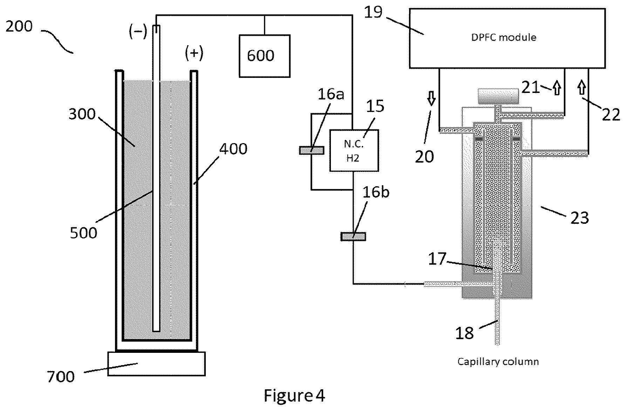

Although Figure 1 represents a preferred embodiment, Figure 4 illustrates an alternative embodiment. A hydrogen system **200** comprises a carrier gas decoupled injection port **23** having a back diffusion barrier **17** which receives a low hydrogen flow such as less than 10 sccm hydrogen which passes through a palladium silver membrane **500.** The palladium silver membrane (which may have the same features as defined above for the gas (palladium) purifier **9**) is immersed in an electrolytic solution **300** which may comprise a solution of sodium or potassium hydroxide. The electrolytic solution **300** may be a 15% concentration in water held in a housing **400.** The electrolytic solution **300** may alternatively comprise a dilute acid solution such as 5% sulfuric acid in deionized water. The palladium silver membrane **500** serves a dual purpose of also acting as a cathode of an electrolytic cell. The housing **400** may act as an anode and may comprise a caustic or acid resistant alloy such as Monel or a pure metal such as nickel. Alternatively, the housing **400** may comprise a chemically resistant polymer such as Teflon along with a separate anode. The separate anode may comprise platinum or a platinum plated material such as platinum plated titanium. Other electrode compositions may be used. Rather than a pressure differential acting as a transport mechanism for hydrogen across palladium silver membrane **500,** hydrogen is driven by the electromotive force (EM F) of the cell. A heating element **700** may surround or be in thermal contact with housing **400** in order to maintain a setpoint temperature from about 60 degree to about 100 degree Celsius, such as 80 degrees Celsius. This elevated temperature will increase the transport efficiency of hydrogen across membrane **500.** A variable current power supply (not shown) can be controlled by a microcontroller (also not shown) receiving a signal from a pressure sensor **600** in order to supply the necessary current in closed-loop manner to achieve a target pressure on the input of valve **15.** Valve **15** and other elements of carrier gas decoupled injection port **23** act in similar manner as described in Figure 1. Potential advantages of the embodiment of Figure 4 include reduced size compared with Figure 1. The hydrogen system **200** of Figure 4 does not require a phase separator, gas dryer, mixed bed ion exchange resin, water circulation pump, back pressure regulators or purge valves.

Membrane **500** may have a surface area no greater than 10 square centimeters, such as no greater than 5 square centimeters.

For example, the membrane **500** may be from about 1 square centimeter to about 10 square centimeters, such as from about 2 square centimeters to about 8 square centimeters or about 5 square centimeters.

It is to be understood that although the embodiment of Figure 1. Illustrates a non-conventional back-pressure regulation scheme with a fixed rate of hydrogen production, that conventional demand based methods may also be used. In similar fashion, although the embodiment of Figure 4. Illustrates a conventional demand based production rate implementation, that a non-conventional fixed rate of hydrogen production along with a non-conventional back pressure regulated scheme may be utilized. It is to be further understood that while various embodiments illustrated employ mechanically actuated fore pressure and back pressure regulators, that electro-mechanical means of pressure and flow control utilizing electric on/off valves, proportional valves, and pressure sensors along with microprocessor based closed-loop control may also be employed.

A description of high purity hydrogen generators utilizing hydrogen transport through palladium silver membranes can be found in an article by A.S. Darling entitled "Thermal and Electrolytic Palladium Alloy Diffusion Cells", Platinum Metals Rev. 7, 126 (1963). Reference is also given to an article by J.K. Jacobsen entitled "Ultrapure Hydrogen Generator for Gas Chromatography", Anal. Chem. 1965 37, 2 (319-320) publication date: February 1, 1965.

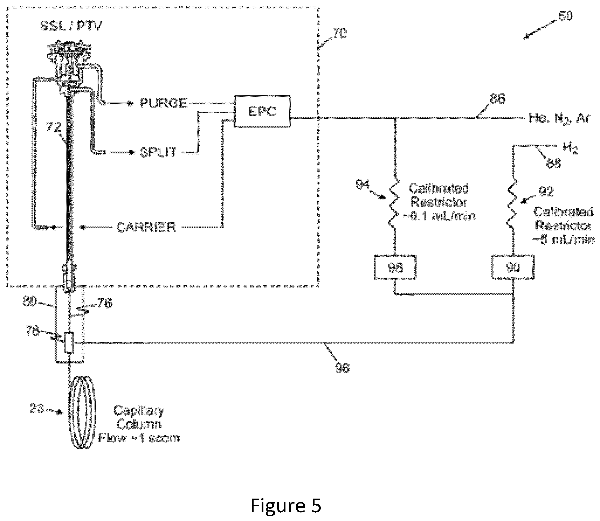

Figure 5 illustrates how the carrier gas-decoupled injection port defined herein may be used in a gas chromatograph system **50.** In the system **50,** hydrogen is delivered into tubing **88** that incorporates a fixed gas-flow restrictor **92** . A valve **90** allows blockage of hydrogen transport through restrictor **92** . Similarly, an inert gas, such as helium, nitrogen or argon, is delivered into a separate tubing **86** from which it serves to pressurize the EPC unit. The inert gas can also serve as a residual gas purge by diverting a portion of the inert gas flow through restrictor **94** (which can be enabled by opening of valve **98** ). It is preferred to use an inert gas as the residual purge since even low flows of hydrogen, e.g. ^{~}0.1 standard cubic centimetres per minute (sccm), can result in adverse chemical reactions. The purpose of the small residual purge is to prevent back diffusion of solvents and sample into the hydrogen deliver line during sample transfer, and to prevent peak tailing caused by void volume effects. In this non-limiting illustrative example, hydrogen can be delivered at an upper flow of approximately 5 sccm when valve **90** is in the open state, and valve **98** is in the closed state, and a residual purge of approximately 0.1 sccm of inert gas when valve **90** is in the closed state and valve **98** is in the open state. The input pressures of inert gas and hydrogen gas as well as the dimensions of restrictors **92** and **98** can be selected in accordance with the Poiseuille equation such that sufficient hydrogen flow (for prevention of back diffusion of inert gas during analysis) and inert residual gas purge (for prevention of peak tailing) are adequate for the inlet pressure in use. A computer algorithm or look up table can be used to set these pressures according to the analytical column dimensions, flow rates and temperatures of the GC method in use.

A capillary analytical column **23** passes through a tee-piece coupling junction **78,** and terminates (i.e., at the column inlet end) within a heated back-diffusion prevention tube **76** whose inner diameter is slightly greater than the outer diameter of the analytical column. The entrance to the column **23** as well as the back diffusion prevention tube **76** and tee piece **78** can be heated within a thermal zone **80** which may be under thermal control that is independent of thermal control of the injection port **72** of injector.

It is to be understood that the tee piece **78,** and back diffusion prevention tube **76** can alternatively be integrated into the lower portion of injection port **72** utilizing the temperature control of the injection port **72** itself rather than thermal zone **80.** In this latter case, it is preferable that the entrance to the analytical column **23** terminates within one centimetre of the entrance to the back diffusion prevention tube **76,** thereby providing minimum pressure drop and compactness.

In operation of the system **50,** either hydrogen or an inert gas passes through the tubing **96** and into the tee piece coupler **78** within which it flows "upward" (more specifically, towards the top of the diagram as shown in **FIG.** 5) into an annular gap within the tube **76** that surrounds an inlet portion of the analytical column **23.** The hydrogen delivered to the tee piece **78** is provided at a flow rate that is somewhat higher than the column flow. For example, 5 mL/min of hydrogen can be delivered for column flows of 1 mL/min. The excess hydrogen will simply be diverted "upwards" (more specifically, towards the top of the diagram as shown in **FIG. 5**) where it contributes to the bulk purge gas used for septum purge and split flow control. Such back flow of hydrogen also prevents back diffusion of the inert pressurization gas from entering the GC column. Decoupling of the purge gas from the gas used for chromatographic analysis has been described in U.S. Pat. No. 8,371,152 which is incorporated by reference herein in its entirety. The embodiment shown in **FIG. 5** allows setting an upper limit to the absolute hydrogen flow to a low level such as 5 sccm. With this arrangement, there will be no unbounded hydrogen flow into the GC oven in the event of a column fracture near the inlet, thereby providing an additional safety factor using hydrogen as a carrier gas. Also, since the absolute flow of hydrogen is low, a single hydrogen generator can serve many gas chromatographs at the same time. When used in conjunction with a nitrogen gas generator, additional safety is provided since no high-pressure gas cylinders are needed. Routine changing of high-pressure gas cylinders is time consuming, involves safety risks and can contribute to instrument down time during maintenance. Thus, embodiments of the described invention provide a solution for hydrogen use in chromatographs that offer reduced chemical reactions, increased safety and reduced maintenance.

The descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

For the avoidance of doubt, in this specification when we use the term "comprising" or "comprises" we mean that the detection cell or system being described must contain the listed components but may optionally contain additional components. Comprising should be considered to include the terms "consisting of' or "consists of" where the flow-through cell or system being described must contain the listed component(s) only.

For the avoidance of doubt, preferences, options, particular features and the like indicated for a given aspect, feature or parameter of the invention should, unless the context indicates otherwise, be regarded as having been disclosed in combination with any and all other preferences, options particular features and the like as indicated for the same or other aspects, features and parameters of the invention.

The term "about" as used herein, e.g. when referring to a measurable value (such as an amount or parameter), refers to variations of ±20%, ±10%, ±5%, ±1%, ±0.5%, or, particularly, ±0.1% of the specified amount.

## Claims

1. A hydrogen gas generator system for a gas chromatograph having a carrier gas-decoupled injection port, wherein the hydrogen generator system comprises an electrolysis cell and a palladium alloy purifier membrane having a surface area of not more than 10 square centimeters.

2. The system of claim 1, wherein the palladium alloy purifier membrane has a surface area of not more than 5 square centimeters.

3. The system according to Claim 1, wherein the palladium alloy purifier membrane is a single linear tube of palladium alloy.

4. The system according to claim 1, wherein the palladium alloy purifier membrane is a palladium silver purifier membrane.

5. The system according to claim 1, wherein the palladium alloy purifier membrane is integrated in the electrolysis cell.

6. The system of Claim 5, wherein the operating temperature of the palladium purifier membrane is from about 60 degree to about 100 degree Celsius.

7. The system according to claim 1, wherein the palladium alloy purifier membrane is separate from the electrolysis cell.

8. The system of Claim 7, wherein the operating temperature of the palladium purifier membrane is from about 310 degree to about 400 degrees Celsius.

9. The system of according to claim 1, wherein the electrolysis cell has an active hydrogen producing surface area of no more than 5 square centimeters and/or a hydrogen generation current of no more than 14 amperes.

10. The system according to Claim 1, wherein the production rate of hydrogen gas is no more than 100 standard cubic centimeters per minute.

11. The system according to Claim 1, wherein the production rate of hydrogen is no more than 25 standard cubic centimeters per minute.

12. The system according to Claim 1, wherein the electrolysis cell comprises a water circulation loop comprising a piezoelectric pump.

13. The system according to Claim 1, further comprising a backpressure regulator.

14. The system according to Claim 13, wherein the backpressure regulator provides an upstream pressure of from about 60 psig to about 150 psig, preferably about 80 psig.

15. The system according to Claim 1, further comprising a polymer ionomer drier for removing water vapor from the hydrogen gas.

16. The system of claim 15, wherein the polymer ionomer drier is kept under vacuum.

17. The system according to Claim 1, wherein the electrolysis cell comprises a palladium alloy cathode.

18. The system according to Claim 1, wherein the electrolysis cell is a polymer electrolyte membrane.

19. The system according to Claim 1, wherein the system is integrated into a module within the chromatograph chassis assembly.

20. A gas chromatography system, having a carrier gas-decoupled injection port, comprising a hydrogen generator system as defined in claim 1.
